# EUROPEAN PATENT APPLICATION

(11) **EP 1 473 065 A2**
(43) Date of publication of application: **03.11.2004**
(21) Application number: 04252370.4
(22) Date of filing: 22.04.2004
(51) Int. Cl.: A63B 71/06, H04M 1/725

(54) **Communications device with scorekeeping features**

(30) Priority: 29.04.2003 GB 0309763
(71) Applicant: Matsushita Electric Industrial Co., Ltd., Kadoma-shi, Osaka-fu, 571-8501 (JP)
(72) Inventor: Apicella, David John, Hampshire Po16 8QL (GB)
(74) Representative: Dawson, Elizabeth Ann

(57) **Abstract**

A mobile phone or other handheld wireless communications device has a scorekeeping feature whereby the individual scores from games played on external equipment can be entered by a user to calculate accumulated or outstanding scores.

## Description

This invention relates to mobile communication devices and in particular it relates to scorekeeping features for games such as darts incorporated in such devices.

Various features have been included in mobile communications devices to provide for amusement and entertainment.

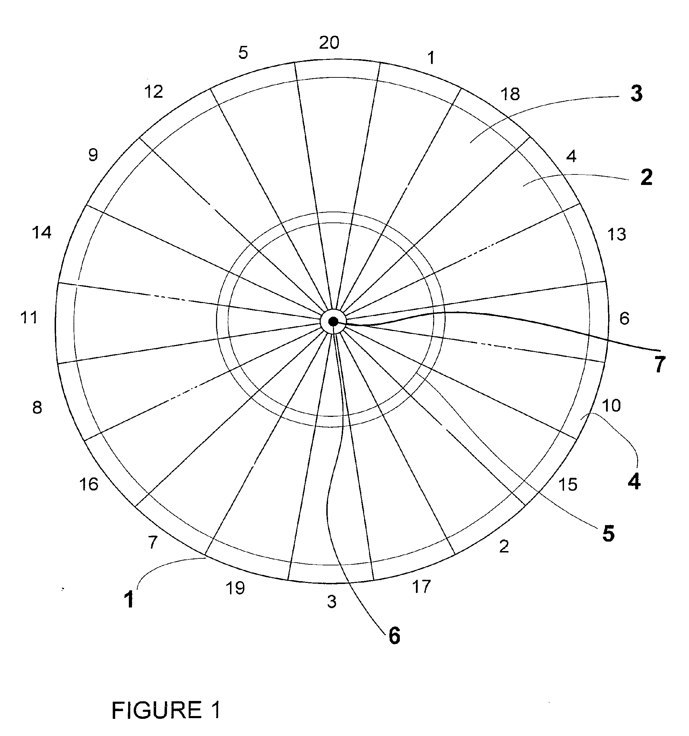

The game of darts in all its varieties relies upon the level of skill with which a thrown dart is directed to its target. The target, traditionally, is a board as shown generally at **1** in figure 1. The board is divided into twenty equal sectors and each sector carries a points score. A dart landing in the sector designated **2** will score 4 points and a dart landing in the sector designated **3** will score 18 points. Double points for the sector are earned by a landing in the outer ring 4 and triple points for a landing in the inner ring **5.** Scores for the concentric lands at the centre of the board, outer **6** and inner **7** are 25 points and 50 points respectively.

In the most familiar game an initial score, e.g. 301 or 501, is allocated to each player and the winning player is the first to reduce the initial score to zero. Each player, in turn, throws a set of three darts and the points scored in each turn are subtracted from the outstanding score. The game must be concluded by a double (outer ring **5**) reducing the outstanding score to zero.

Scorekeeping may be by means of a chalkboard or a dry erase inkboard. These tend to be messy and inconvenient and their replacement by mechanical or electronic scoring devices has been prompted by many disclosures in the prior art. Nevertheless the majority of inkboards and chalkboards have yet to be replaced, suggesting that the expense and inconvenience of the replacements are too high.

Scoring devices tend also to be fixtures and as such often suffer from abuse and poor maintenance. Portable scorekeeping devices for personal use have been proposed e.g. GB 2 166 056, GB 2 293 329, GB 2 271 063 and DE 100 01 296. These devices, however, are purely scorekeepers and are likely to appeal only to dedicated competitors.

Mobile phones and the like are extremely common and incorporation of a scorekeeping feature for a game played outside the phone would be welcomed by many users of mobile phones and other communication devices, particularly if no modifications to the external layout of the device were required.
The present invention provides a handheld wireless communications device having transceiver means for transmitting and receiving electromagnetic signals, and user interface means including a keypad, visual display, microphone and loudspeaker, the device further having game scorekeeping means including signal processing means responsive to the user interface means for calculating an accumulated or outstanding score according to the rules of the game in response to an individual score entered by the user via the user interface means, and presenting the accumulated or outstanding score to the user via the interface means.

Preferred features of the device are described in claims 2 to 18.
It is well known in the art to provide alternative features for mobile wireless devices like by downloading of programs from memory cards or over-the-air. By these means programs and data may be transferred from a carrier to a hand held wireless communications device whereby the device is configured to run a program transferred from the carrier.

A hand held wireless communication device of the type described may be configured to provide game scorekeeping in accordance with the present invention by transfer to the device of a program from a program carrier. The program carrier may be, amongst other things, memory within a server or a transportable memory card.

Examples of implementations of the invention will now be described with reference to the drawings in which:
Figure 1 shows a standard dartboard
Figure 2 is a pictorial view of a mobile communication device
Figure 3 is a block diagram of part of a mobile phone
Figure 4 demonstrates a menu selection procedure
Figure 5 illustrates a scorekeeping sequence
Figure 6 illustrates a cricket scorekeeping sequence
Figure 7 simple programme for cricket

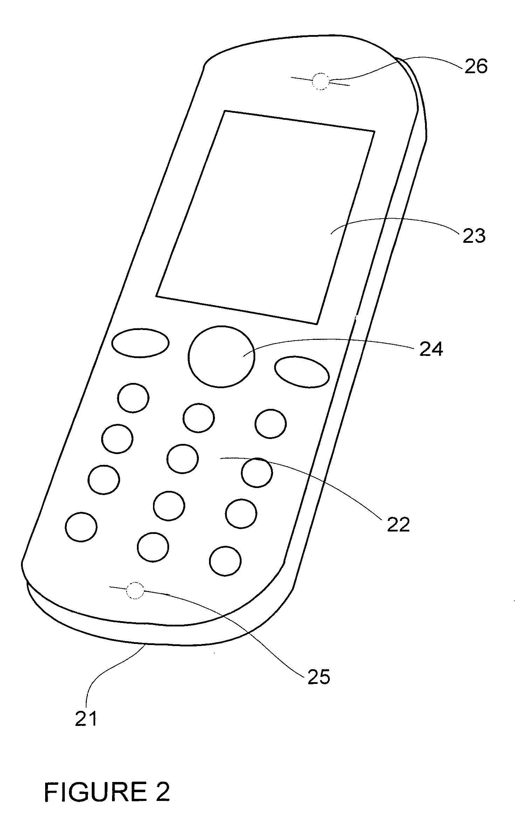

With reference to figure 2, a portable communications device is shown generally at **21** and the user interface comprises a keypad **22**, display **23**, microphone **25** and loudspeaker **26.** Selection of the feature or service required from the device is by means of menus presented on the display **23** in response to user prompts on the keypad **22.** One of the keys **24** is a navigation key and is rocked up and down or side to side to move a cursor on display **23.** Depression of the navigation key **24** enters the menu item currently under the cursor. The scorekeeping features of the present invention are accessed, in this embodiment, via the menu structure. The operation of a menu structure is described in e.g. US 5 758 295. Briefly, the menu structure is typically in the form of a "tree" structure, with a main menu and a number of submenus presented in response to the selection of an item in the main menu, each menu appearing as a "pick list"

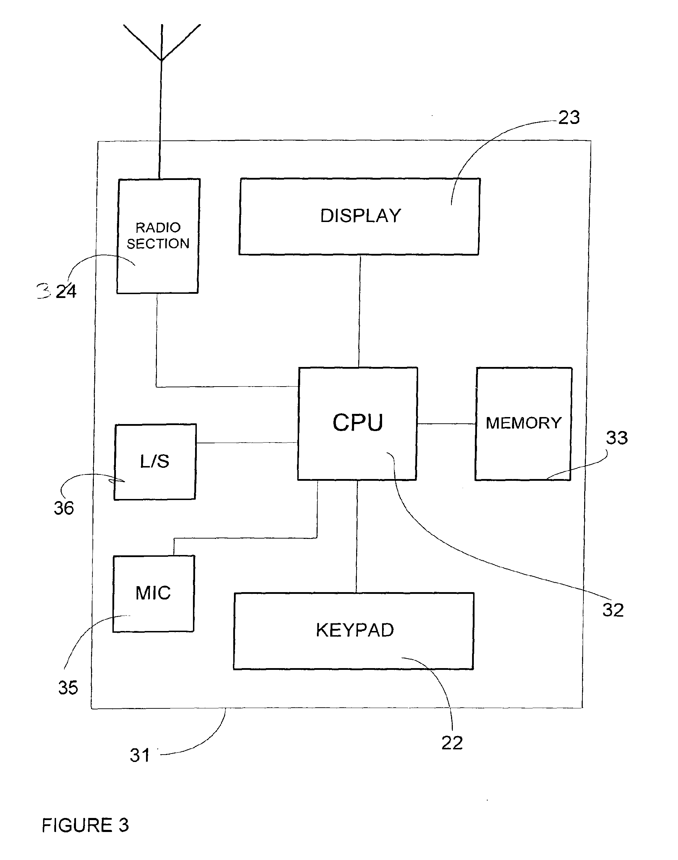

The parts of a mobile phone relevant to the invention are shown in figure 3. The mobile phone shown generally at **31** includes a central processing unit (CPU) **32,** memory **33 ,** a display **23** and a keypad **22.** The mobile phone operates under the control of CPU **32** in accordance with programs stored in memory **33**. Apart from control programmes, other data may be stored in memory **33,** specifically data entered via keypad **22** or for presentation on display **23.** Radio section **34** provides communications with the network over the air interface, whilst microphone **35** and loudspeaker **36** provide the audio interface with the user. A microprocessor separate from CPU **32** may be used to implement the invention if it is convenient to do so. A memory separate from memory **33** may also be used. The processor and memory may be supplied as a detachable unit such as an electronic card for insertion in mobile phone **31.**

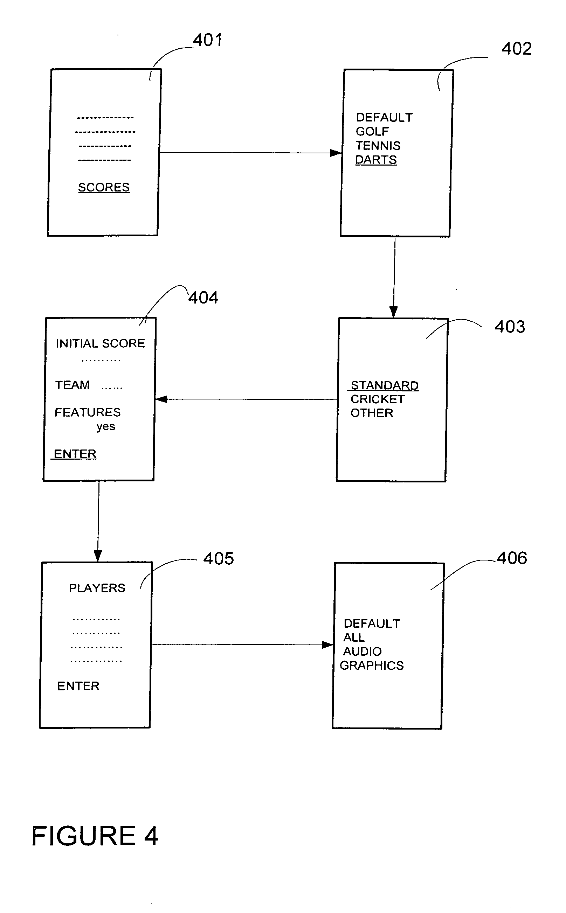

A menu selection is demonstrated in figure 4, where a first menu, which may be a sub-menu, offers the scorekeeping feature at **401.** Selection by the user of "SCORES" prompts a sub menu **402** where the available scorekeeping options are displayed. One of these options, conveniently, may be a pre-set or default option whose selection will cause a reversion to a pre-programmed function and avoid any tedium associated with the additional settings normally required. This default option may be carried forward to successive sub menus.

Reverting to menu **402**, we select "DARTS" and are presented with menu **403** from which we select "STANDARD" and are passed to menu **404** to enter an initial score, say 701, select Yes for both "TEAM" and "FEATURES" and "enter". As the TEAM selection was made at **404** a further selection of PLAYERS is presented at **405.** We have two teams of two players and insert the names of the players in order of play (Jon, Jo, Sue, Bob. The next menu **406** presents the features available.

The features provided may be selected from the following items which will be described below in more detail: Visual on display, Visual on projector, Audio, Best combinations (predictor), Graphics, Corrections, Handicapping, Interactive, History, Statistics, Recorded audio

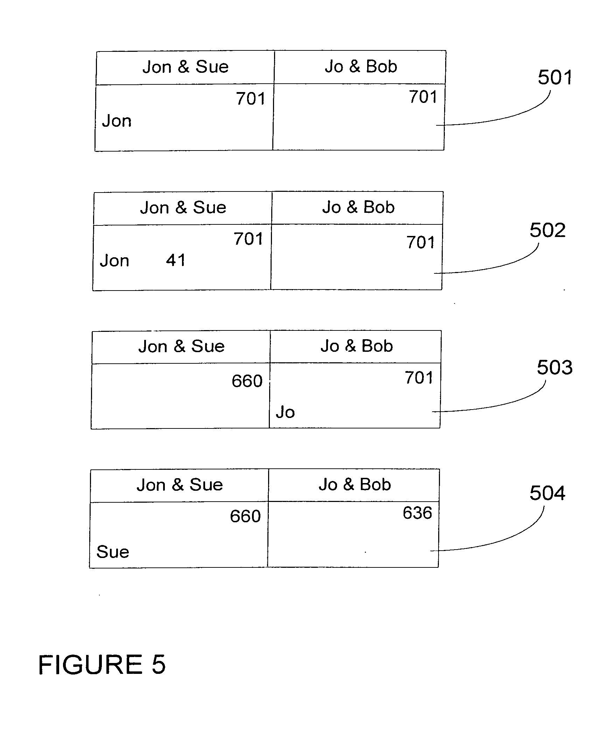

Availability of some features will depend upon the configuration of the particular device and its ability to support those features.
By way of example we select "visual on display" and on the display **23** of figure 2 the initial score and the names of the players are presented. The display sequence as the game progresses is illustrated in figure 5. With reference to figure 5, the first player to throw (Jon) is prompted at screen **501.** Jon scores **41** and that score is entered via the keypad **22** of figure 2. The score flashes alongside Jon's name as shown on screen **502** until it is confirmed by an entering that "menu item" by depression of the navigation key. On confirmation of the score of 41 the outstanding score 660 is presented on the left hand side of the screen and the next player, Jo is prompted.

A score of 65 achieved by Jo is entered via the keypad and confirmed and the screen **504** indicates outstanding scores and next player to throw. This process continues until the outstanding score of one of the teams is reduced to zero.

The alternative dart game known as cricket may be selected at the menu **403.** The scoring for cricket differs from the standard darts game in that the outstanding score increases and only certain sectors are available for the scoring of points. Each player takes a turn of three dart throws and attempts to land three darts in a single sector. Normally only the sectors 15 to 20 and the bullseye are contested. When the first player lands three darts in sector 15, that sector is closed and the first player may then accumulate a score from that sector until the second player has also closed that sector.

The first player achieving the higher score and closing all sectors and bullseye wins the game. Alternatively there is no scoring and the first player to close all sectors and bullseye wins

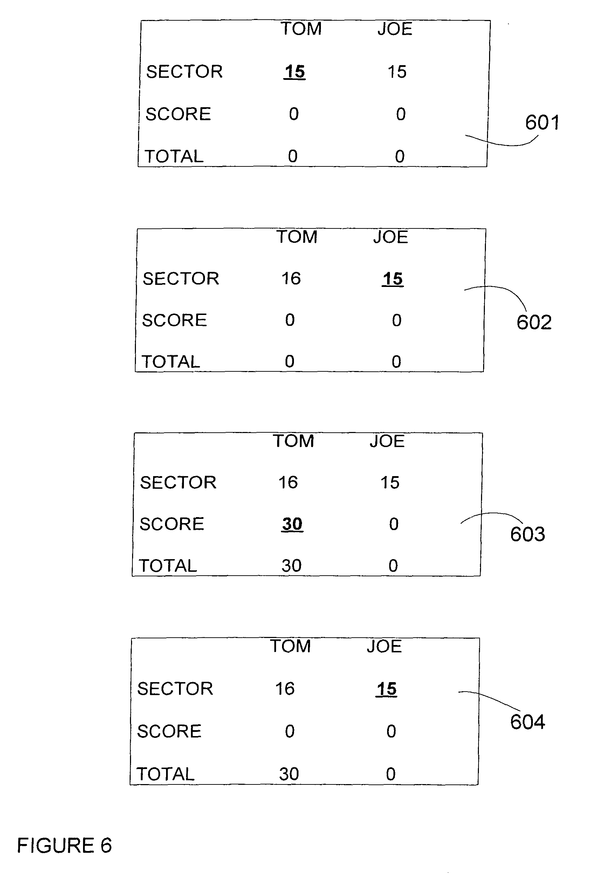

An example of the scorekeeping for the scoring cricket game is shown in figure 6. At the start of the game the screen **601** is presented and the first named player indicated by the cursor position over the numeral 15 under TOM. The underlining in figure 6 identifies the cursor positions. We assume here that all three darts thrown by TOM are landed in sector 15. Depression of the navigation key with the cursor over numeral 15 increments the sector displayed to 16 and moves the cursor to 15 under JOE.

A failure to score a landing of three darts leaves JOE on sector 15 while Tom has the opportunity to score and collects 30 points. The cursor is moved by means of the navigation key to the TOM/SCORE intersect as shown in 603 and 30 points are entered via the numeric keys. The 30 is then selected by depression of the navigation (enter) key causing the figure at the TOM/SCORE intersect to return to zero, the TOM/TOTAL intersect figure to 30 and the cursor to cover the JOE/SECTOR intersect.

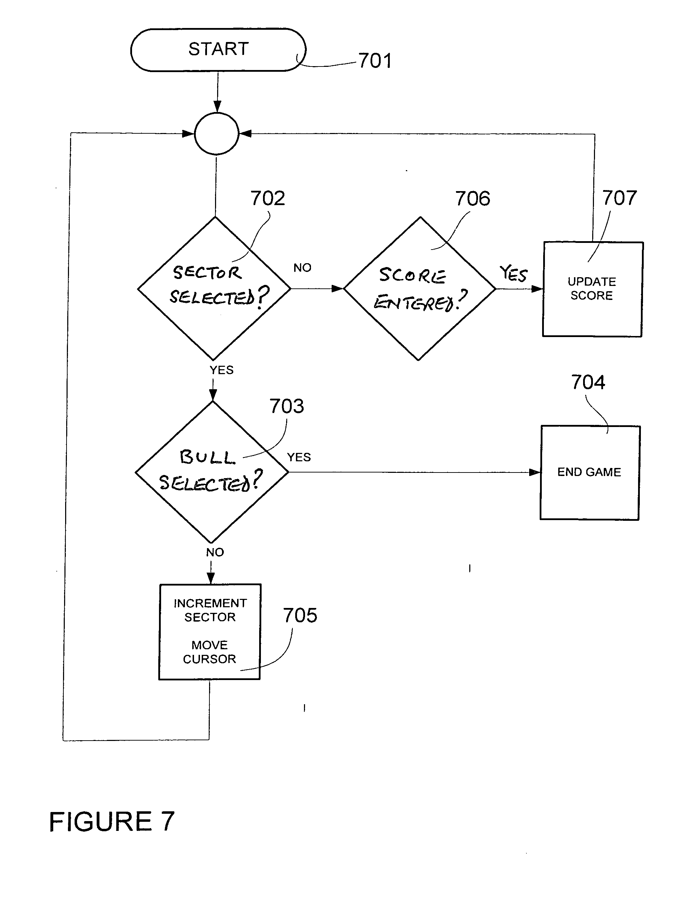

A successful turn by JOE is followed by an entry at the current cursor position to increment the sector from 15 to 16 and return the cursor to the TOM/SECTOR position. The scorekeeping proceeds in like manner until all of the available sectors, including bullseye, are exhausted by one of the players. A simple program to achieve this is illustrated in figure 7.

With reference to figure 7, the start **701** is the presentation of screen **601**with the cursor over the first named player. If a sector is selected at **702** then a further check at **703** determines whether or not the bullseye (50 points) was the sector selected. Selection of a bullseye (**703**) causes the end of the game (**704**) otherwise the displayed sector is incremented and the cursor moved at **705.** When no sector is selected at **702**, a score may be entered at **706.** When a score is entered at **706**, the total score is updated and the cursor moved at **707.** If no score is entered at **706** then the cursor remains in its position.

Methods have been proposed for enabling a larger display and user input area by means of virtual displays (e.g. EP 982 676) and work in this field continues. Projection systems are also available such as in GB 2 362 775. The inputs and menu selections of the present invention may be via a virtual keyboard and the scorekeeping output may be presented on a projection system associated with the device in question.

It will be apparent to those skilled in the art that many more scorekeeping features for a variety of games other than darts may be implemented using these arrangements but with variations in accordance with the particular game of interest.

### Visual on display

Selection of this feature provides the scorekeeping presentation on the standard user interface.

### Visual on projector

This feature enables a projector display of the scorekeeping presentation. Where a virtual keyboard user input is available, the scores may be entered via the virtual keyboard.

### Audio

An audio output is enabled for this feature, whereby synthesised voice outputs follow the entry of the scores e.g. "Jon scores 41 remaining score 660".

### Recorded audio

Alternative recorded voice or music clips may be triggered depending upon the result of the game or by prompts from the user interface.

### Best combinations (predictor)

Until the outstanding score has been reduced to a certain level (160 in the above example) the highest score is attempted at each throw. When the outstanding score has fallen to 160 various combinations of scores to reach zero score may be preferred. For example to finish the game from a score of 160 the sequence is limited to treble 20, treble 20, double 20. For lesser outstanding scores some preference may be given to certain sequences and these sequences displayed (or generated as recorded voice or synthesised voice). In other games, other kinds of advice may be provided to the user.

### Graphics

Where a graphic output and /or input is available a graphic presentation of the dartboard may be presented and the scores entered by touching with a pointer the appropriate part of the board. In addition an animated character may point to the next required scoring area. Similar "touch sensitive" features may be provided for other games.

### Recorded graphics

Presentation of a recorded graphic image may be triggered by an event such as the completion of the game. One or other of alternative graphic images can be triggered depending upon the result of the game.

### Handicapping

Automatic or preset handicap conditions may be employed. A preset handicap would be for example three throws allowed for each member of the weaker team with only two throws allowed for each member of the stronger team. An automatic handicap may be a random reduction of individual scores of the handicapped team.

### Interactive

Scoring for games played between a local and a remote team can be accommodated. A videocam attachment to each of a local and remote telephone allows both teams to view their own and the opposing team's dartboard and scores. Scorekeeping by both teams independently may be preferred or one team keeping score can update the opposing team over the air eg. By SMS.

### History

The scores achieved during one or more games may be stored for later recall.

### Statistics

Statistics may be computed for presentation of highest score, least number of throws or similar over a period.

## Claims

1. A handheld wireless communications device having transceiver means for transmitting and receiving electromagnetic signals, and user interface means including a keypad, visual display, microphone and loudspeaker, the device further having game scorekeeping means including signal processing means responsive to the user interface means for calculating an accumulated or outstanding score according to the rules of the game in response to an individual score entered by the user via the user interface means, and presenting the accumulated or outstanding score to the user via the interface means.

2. A device according to claim 1 having game scorekeeping means for a plurality of games having different rules, a game being selectable by the user via the user interface means.

3. A device according to claim 1 or 2 in which a plurality of features are available for the or each game.

4. A device according to claim 3 in which the available features include presentation of the score on the visual display.

5. A device according to claim 3 or 4 in which the device has an optical projection facility and the available features include presentation of the score via the projection facility.

6. A device according to claim 3, 4 or 5 in which the available features include an audio announcement of the score.

7. A device according to claim 3, 4, 5 or 6 in which the available features include stored audio clips which are played via the loudspeaker at predetermined stages of the game.

8. A device according to any of claims 3 to 7 in which the available features include the presentation of advice to the user.

9. A device according to any of claims 3 to 9 in which at least one game can be played by two or more players and the available features include a handicap facility for a subset of the set of players.

10. A device according to any of claims 3 to 9, in which the available features include recording scores from previous games.

11. A device according to any of claims 3 to 10 in which the available features include computation of statistics from a plurality of games.

12. A device according to any of claims 3 to 11 in which the available features are presented to the user in a menu structure.

13. A device according to any of claims 2 to 12 in which the available features are selectable by the user via the user interface means.

14. A device according to claim 2 or any of claims 3 to 13 when dependent on claim 2, in which a plurality of available games are presented to the user in a menu structure.

15. A device according to claim 13, 14 or 15 in which the menu structures are sub menus of a main menu used for the device communications features.

16. A device according to claim 13, 14 or 15 in which the device has a dedicated key for accessing the menu structure which is also used to access the games menu.

17. A device according to any of claims 3 to 8 having a touch sensitive visual display via which score data may be entered.

18. A device according to any preceding claim adapted for scorekeeping between remote parties having means for receiving and processing a score received from a remote party via SMS.

19. A device substantially as hereinbefore described with reference to the accompanying drawings.

20. A computer program product for use in a handheld wireless communications device having transceiver means for transmitting and receiving electromagnetic signals, and user interface means including a keypad, visual display, microphone and loudspeaker, which program operates to configure the device as a device according to any preceding claim.

21. A transportable memory card bearing a computer program product as claimed in claim 20.

22. A computer program product substantially as hereinbefore described with reference to the accompanying drawings.

23. A transportable memory card substantially as hereinbefore described with reference to the accompanying drawings.
